# EUROPEAN PATENT APPLICATION

(11) **EP 3 277 035 A1**
(43) Date of publication of application: **31.01.2018**
(21) Application number: 16767646.9
(22) Date of filing: 26.02.2016
(51) Int. Cl.: H04W 68/00

(54) **METHOD, DEVICE AND SYSTEM FOR OPTIMIZING PAGING, AND STORAGE MEDIUM**

(30) Priority: 23.03.2015 CN 201510128056
(71) Applicant: ZTE Corporation, Shenzhen, Guangdong 518057 (CN)
(72) Inventor: GAO, Yin, Shenzhen Guangdong 518057 (CN)
(74) Representative: Witte, Weller & Partner Patentanwälte mbB
(86) International application number: PCT/CN2016/074737
(87) International publication number: WO 2016/150269

(57) **Abstract**

The various embodiments of the present disclosure describes a method, apparatus, system, and a storage medium for paging optimization, the method comprising: obtaining past visiting information of a UE to be paged and optimize paging message conveying range based on the past visiting information the UE and a predefined optimization strategy. In embodiments of the present disclosure, a better optimized paging strategy can be provided based on the past visiting information of the UE to be paged in order to prevent signaling storm caused by paging, and avoid excessive radio-frequency consumption to some extent, such that balance user paging experience and consumption of radio-frequency resources.

## Description

### TECHNICAL FIELD

The present disclosure relates to the field of mobile communication, in particular to a method, an apparatus, a system and a storage medium for paging optimization.

### BACKGROUND

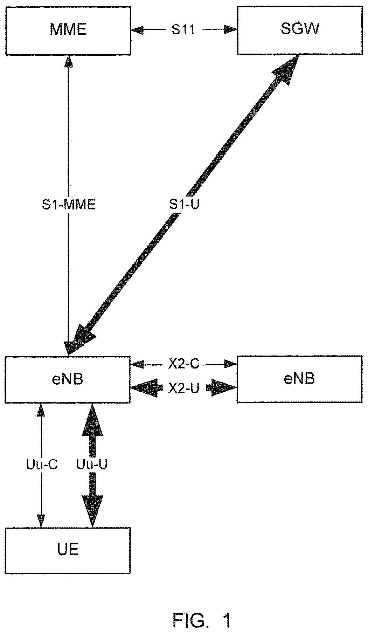

Figure 1 is an overall architecture of a Long Term Evolution (LTE) system in the state of the art. As shown in Figure 1, the high-level architecture of LTE includes a Mobility Management Entity (MME), a Service Gateway (SGW), User Equipments (UE), and base stations (eNodeB, referred to as eNB). UE communicates with the eNB by means of the UU interface. The interface between eNB and MME is S1-MME interface (S1 for the control plane). The interface between eNB and SGW is S1-U interface. The interface between two eNBs can be the X2-U (X2-user plane) interface and the X2-C (X2- control plane) interface. In LTE, the protocol stack of the S1-MME interface is divided into the following protocol layers from bottom up: L1 Protocol, L2 Protocol, Internet Protocol (IP), Stream Control Transmission Protocol (SCTP), and SI-Application Protocol (S1-AP). In LTE, the protocol stack of S1-U interface is divided into the following protocol layers from bottom up: L1 protocol, L2 protocol, User Data Protocol / Internet Protocol (UDP/IP), and GPRS tunnel protocol - User Plane (GTP-U).

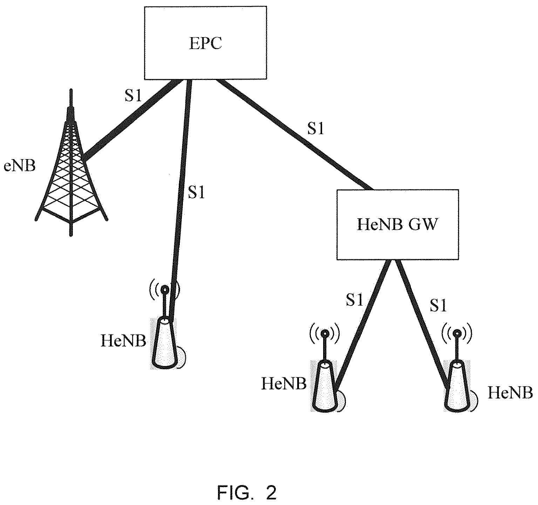

In order to provide users services with higher data rate and reduced cost and also enhance the coverage of legacy distributed cellular wireless communication system at the user's home or offices, wireless communications network operators can modify a fixed eNB into a portable broadband access device that is easy to carry and install for use at home or office. The home eNB (HeNB) is a small, low-power eNB that is used primarily for small-scale indoor locations such as homes and offices. The home base station connects to the mobile operator's core network through indoor wired cable, DSL (Digital Subscriber Loop), or optical fiber and other wired access devices to provide a wireless mobile communication network-based access service for specific users (home base station gateway architecture as shown in Figure 2). Deployment of this technology is an effective complement to the existing network, which can effectively improve coverage of the indoor voice and high-speed data service. It has many advantages, such as low cost, low power, simple access, plug and play, saved backhaul, compatible with existing terminals, improved network coverage, and so on.

The home base station in the LTE (Long Term Evolution) system defined by the Third Generation Partnership Projects (referred to as 3GPP) is called HeNB (home eNB). The functions supported by HeNB are basically the same as those of eNB. The process between HeNB and EPC (Evolved Packet Core) and the process between eNB and EPC are also basically the same. The deployment of HeNB is usually not taken into consideration in mobile network operator's network planning, the coverage of HeNB is small and the number of HeNB is large. Therefore, in order to more easily manage and support a greater number of HeNB, a new network entity, HeNB Gateway (Home eNB Gateway), between the S1 connection of HeNB and EPC is likely to be introduced in the E-UTRAN (Evolved UTRAN, Evolved Universal Terrestrial Radio Access Network) architecture. The HeNB can communicate with the Mobility Management Entity (MME) via the HeNB Gateway (GW), which acts as an S1 proxy.

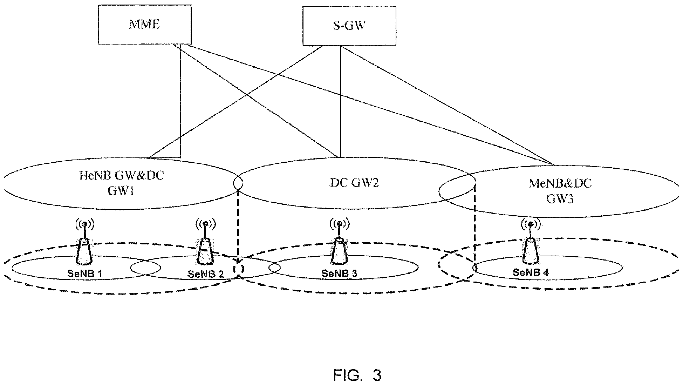

In the existing LTE system, the network can send paging message to a UE either at idle or in a connected state. In order to implement the paging function, a MME sends a paging message through a TAI (Tracking Area Identifier) list associated with the UE. Optimally, in a HeNB environment, the MME can further optimize the paging message conveying range through the CSG (closed subscriber group) information associated with the UE and the CSG access mode information. In current network evolution, a large number of small base stations and home base stations will be introduced. An architecture diagram of a small base station gateway with dual connection is shown in Figure 3. Because smart phones have generally higher power consumption than functional mobile phones, in order to save power, smart phones enter a "sleep" mode much quicker. However, when a UE (e.g., a smart phone) enters the "sleep" mode, the network downlink packets cannot be sent directly to the UE. Instead, the MME send a paging message to the UE to wake up the UE from the "sleep" mode to send downlink packets. So with the increasing popularity of smart phones, paging messages will also increase, which increases the load on the network. At the same time, a variety of push (Push) services increase, which will lead to a large number of paging messages sent to mobile terminals in "sleep" mode. If the push service messages are sent to a stadium with a high-density population, it is likely to induce a LTE / EPC network signaling storm, which will further cause overload the network or even worse bring down the network.

Currently, a paging message is sent by a MME to an eNB, where the eNB searches for the associated UEs within its coverage and therefore occupies the radio resources of the eNB. In order to improve the success rate of paging and the end user's experience, the MME needs to send a large number of paging messages and expand the paging range. However, the more paging messages sent by the MME with a greater paging range, the more radio resources will be consumed.

### SUMMARY

In order to solve the existing technical problem, one embodiment of the present disclosure provides the following technical solution:
A method of paging optimization, comprising:
   obtaining a past visiting information of the UE to be paged; and
   optimizing a paging message conveying range according to the past visiting information of the UE to be paged and a predetermined optimization strategy.

In one specific embodiment, the past visiting information of the UE to be paged comprises information about a recent cell the UE visited during a connected and/or idle state,

The recent cells comprise one or more types of cells or access points including: a UTRAN cell, a GERAN (GSM EDGE Radio Access Network) cell, a LTE cell, a CDMA (Code Division Multiple Access) cell, and/or WLAN (wireless local area network) system access point.

In one specific embodiment, the cell information includes one or more of a cell global identifier, a cell type, a time stayed, and information about a respective small base station gateway or a home base station gateway.

In one specific embodiment, the information about the respective small base station gateway or the respective home base station gateway is the IP address or the ID of the respective small base station gateway or the respective home base station gateway.

In one specific embodiment, the obtaining the past visiting information of the UE to be paged comprises:
obtaining the past visiting information of the UE to be paged from an S1 interface message.

In one specific embodiment, the S1 interface message includes one or more of the following messages: an INITIAL UE MESSAGE, an UPLINK NAS TRANSPORT message, a LOCATION REPORT message.

The embodiment of the present disclosure also discloses a method of paging optimization comprising:
transmitting a past visiting information of the UE to be paged, wherein the past visiting information is for optimizing a paging message conveying range.

In one specific embodiment, the past visiting information of the UE to be paged comprises information about the recent cells which the UE visits during the connected and/or idle state.

The recent cells that the UE to be paged visited comprise one or more types of cells or access points of a UTRAN cell, a GERAN cell, a LTE cell, a CDMA cell, and/or a WLAN access point.

In one specific embodiment, the cell information includes one or more of a cell global identifier, a cell type, a time stayed, and/or information about a respective small base station gateway or a respective home base station gateway corresponding to a cell.

In one specific embodiment, information about the respective small base station gateway or the respective home base station gateway is a IP address or a ID of the respective small base station gateway or the respective home base station gateway.

In one specific embodiment, the past visiting information of the UE to be paged, comprises:
transmitting the past visiting information of the UE to be paged through an S1 interface message.

In one specific embodiment, an S1 interface message includes one or more of the following kinds of messages: INITIAL UE MESSAGE, UPLINK NAS TRANSPORT message, LOCATION REPORT message and the like.

The embodiment of the present disclosure also provides an apparatus of paging optimization comprising: a first acquisition module, a configuration module and an optimization module; wherein
the first acquisition module configured to obtain a past visiting information of a UE to be paged;
the configuration module is configured to configure an optimization strategy;
the optimization module is configured to optimize the paging message conveying range according to the past visiting information of the UE to be paged and the predetermined optimization strategy.

In one specific embodiment, the first acquisition module is further configured to obtain information of a recent cell that a UE to be paged visited during the connected and/or idle state, the recent cell comprising one or more of the cells or access points including: a UTRAN cell, a GERAN cell, a LTE cell, a CDMA cell and a WLAN access point.

In one specific embodiment, the first acquisition module is further configured to obtain one or more of the following cell information of a recent cell that a UE to be paged visited during the connected and / or idle state: a cell global identifier, a type of cell, a time stayed, information about a respective small base station gateway or a respective home base station gateway corresponding to the cell.

In one specific embodiment, the first acquisition module is further configured to acquire IP address or ID information of the respective small base station gateway or respective home base station gateway.

In one specific embodiment, the first acquisition module is further configured to obtain past visiting information of a UE to be paged from an S1 interface message.

In one specific embodiment, the first acquisition module is further configured to obtain past visiting information of a UE to be paged from one or more of the following S1 interface messages including: an INITIAL UE MESSAGE, an UPLINK NAS TRANSPORT message, a LOCATION REPORT message and the like.

The embodiment of the present disclosure also provides an apparatus of paging optimization, comprising: a second acquisition module and a transmission module; wherein
the second acquisition module configured to obtain a past visiting information of a UE to be paged;
the transmission module is configured to transmit the past visiting information of the UE to be paged, wherein the past visiting information of the UE to be paged is for optimizing a paging message conveying range.

In one specific embodiment, the transmission module is further configured to transmit information of a recent cell which the UE visits in a connected state and / or an idle state, the recent cell comprising one or more of the following types of cells or access points: the cell of the UTRAN system, the cell of the GERAN system, the cell of the LTE system, the cell of the CDMA system, the WLAN system access point information.

In one specific embodiment, the transmission module is further configured to transmit one or more of the following cell information of a recent cell which the UE visited in the connected and / or idle state: a cell global identifier, a cell type, a time stayed, and information about the respective small base station gateway or home base station gateway corresponding to the cell.

In one specific embodiment, the transmission module is further configured to transmit IP address and ID information of the respective small base station gateway or the respective home base station gateway corresponding to the cell.

In one specific embodiment, the transmission module is further configured to transmit the past visiting information of the UE to be paged through the S1 interface message.

In one specific embodiment, the transmission module is further configured to send the past visiting information of the UE to be paged to be addressed by one or more of the following S1 interface messages: an INITIAL UE MESSAGE, a UPLINK NAS TRANSPORT message, a LOCATION REPORT message, and the like.

The embodiment of the present disclosure also provides a system of paging optimization comprising a paging optimization apparatus for paging optimization of the past visiting information of the UE to be paged, and a paging optimization apparatus for paging message conveying range optimization.

The embodiment of the present disclosure also provides a storage medium wherein a computer program is stored thereon, the computer program is configured to perform the paging optimization method.

The method, apparatus and system for paging optimization according to the embodiments of the present disclosure optimize the paging message conveying range according to past visiting information of a UE to be paged and a predetermined optimization strategy. In the embodiment of the present disclosure, it is possible to provide a more optimized paging strategy based on past visiting information of a UE to be paged, thereby preventing the excessive consumption of wireless radio-frequency resources and preventing the occurrence of signaling storm generated by the paging process. Therefore, a good balance between the paging experience of the end user and the consumption of the radio-frequency resource can be achieved.

### BRIEF DESCRIPTIONS OF THE DRAWING

Figure 1 is an overall architecture of LTE.
Figure 2 illustrates an architecture diagram of a home base station gateway.
Figure 3 illustrates an architecture diagram of a small base station gateway.
Figure 4 illustrates a flow diagram of a method of paging optimization, according to an embodiment of the present disclosure.
Figure 5 illustrates a flow diagram of a method for paging optimization, according to an embodiment of the present disclosure.
Figure 6 illustrates a structure diagram of an apparatus for paging optimization, according to an embodiment of the present disclosure.
Figure 7 illustrates a structure diagram of an apparatus for paging optimization, according to an embodiment of the present disclosure.
Figure 8 illustrates a flow diagram of a method for paging optimization, according to embodiment 1 of the present disclosure.
Figure 9 illustrates a flow diagram of a method for paging optimization, according to embodiment 2 of the present disclosure.
Figure 10 illustrates a flow diagram of a method for paging optimization, according to embodiment 3 of the present disclosure.
Figure 11 illustrates a flow diagram of a method for paging optimization, according to embodiment 4 of the present disclosure.

### DETAILED DESCRIPTION

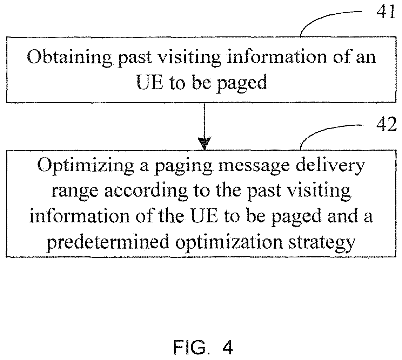

In order to effectively implement paging optimization, one embodiment of the present disclosure provides a flow diagram of a method of paging optimization, as shown in Figure 4, the method comprising:
Step 41: obtaining a past visiting information of a UE to be paged;
   wherein the past visiting information of a UE to be paged can be obtained from an S1 interface message. In one specific embodiment, MME obtains the past visiting information of the UE to be paged from an S1 interface message sent from an eNB. The S1 interface message may be one or more of the following: an INITIAL UE MESSAGE, an UPLINK NAS TRANSPORT message, a LOCATION REPORT message.
Step 42: optimizing a paging message conveying range according to the past visiting information of the UE to be paged and a predetermined optimization strategy.

In one specific embodiment, the past visiting information of the UE to be paged includes information about the recent cell in which the UE visited during a connected and/or idle state.

The recent cell which the UE to be paged visited comprises one or more types of cells or access points of the following: a UTRAN cell, a GERAN cell, a LTE cell, a CDMA cell and a WLAN access point.

It should be noted that, recent cells are sorted in a time order, for example, the latest cell record is the first in a recent cell list and so on.

In one specific embodiment, the cell information includes one or more of the following: cell global identifier, cell type, time stayed, and information about a respective small base station gateway or a respective home base station gateway corresponding to a cell.

In one specific embodiment, the information about the respective small base station gateway or the respective home base station gateway according to the cell is IP address or ID information of the respective small base station gateway or the respective home base station gateway.

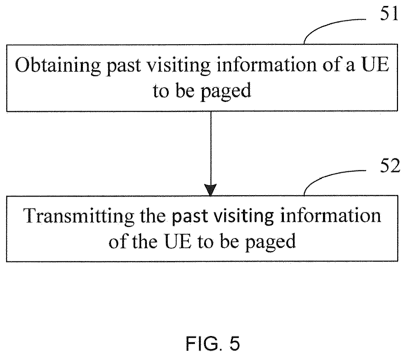

Another embodiment of the present disclosure also provides a paging optimization method, as shown in Figure 5, the method comprising:
Step 51: obtaining a past visiting information of a UE to be paged.

Herein, the obtaining of the past visiting information of the UE to be paged includes collecting information of the past visiting of the UE to be paged.
Step 52: transmitting the past visiting information of the UE to be paged for optimizing the paging message conveying range.

In one specific embodiment, the past visiting information of the UE to be paged includes information about the recent cell which the UE visits during the connected state and / or the idle state.

The recent cell comprises one or more types of cells or access points of the following: a UTRAN cell, a GERAN cell, a LTE cell, a CDMA cell and a WLAN access point.

In one specific embodiment, the cell information includes one or more of a cell global identifier, a cell type, a time stayed, and information about a respective small base station gateway or a respective home base station gateway corresponding to a cell.

In one specific embodiment, the information about the respective small base station gateway or the respective home base station gateway information is IP address or ID information of the respective small base station gateway or the respective home base station gateway.

In one specific embodiment, transmitting the past visiting information of the UE to be paged, comprising:
transmitting a past visiting information of a UE to be paged through an S1 interface message.

In one specific embodiment, the S1 interface message includes one or more of the following: an INITIAL UE MESSAGE, an UPLINK NAS TRANSPORT message, a LOCATION REPORT message, and the like.

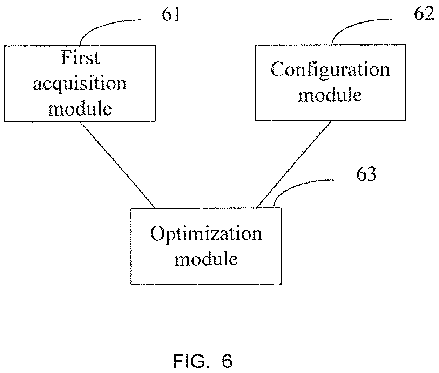

Another embodiment of the present disclosure also provides an apparatus for paging optimization as shown in Figure 6, the apparatus includes a first acquisition module 61, a configuration module 62 and an optimization module 63, wherein,
the first acquisition module 61 is configured to obtain a past visiting information of the UE to be paged;
the configuration module 62 is configured to configure an optimization strategy;
the optimization module 63 is configured to optimize the paging message conveying range according to the past visiting information of the UE to be paged and a predetermined optimization strategy.

In one specific embodiment, the first acquisition module 61 is further configured to obtain information about a recent cell resident in the connected and / or idle state of the UE to be paged, the recent cell comprising one or more types of cells or access points: a UTRAN cell, a GERAN cell, a LTE cell, a CDMA cell, and a WLAN access point.

In one specific embodiment, the first acquisition module 61 is further configured to obtain one or more of the following cell information of a recent cell that the UE to be paged visited in the connected state and / or idle state: cell global identifier, type of cell, time stayed, and information about a respective small base station gateway or a respective home base station gateway corresponding to a cell.

In one specific embodiment, the first acquisition module 61 is further configured to acquire IP address or ID information of the respective small base station gateway or the respective home base station gateway corresponding to the cell.

In one specific embodiment, the first acquisition module 61 is further configured to obtain the past visiting information of the UE to be paged from an S1 interface message.

In one specific embodiment, the first acquisition module 61 is further configured to obtain a past visiting information for the UE to be paged by means of one or more of the following S1 interface messages: INITIAL UE MESSAGE, UPLINK NAS TRANSPORT, LOCATION REPORT and the like.

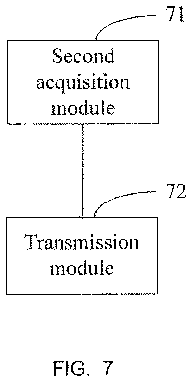

Another embodiment of the present disclosure also provides an apparatus for paging optimization, as shown in Figure 7, comprising a second acquisition module 71 and a transmission module 72, wherein
the second acquisition module 71 is configured to obtain the past visiting information of the UE to be paged;
the transmission module 72 is configured to transmit the past visiting information of the UE to be paged, and the past visiting information of the UE to be paged is used for optimizing the paging message conveying range.

In one specific embodiment, the transmission module 72 is further configured to send information of a recent cell in which the UE visited in the connected and / or idle state, the recent cell comprising one or more of the following cells or access points: a UTRAN cell, a GERAN cell, a LTE cell, a CDMA cell and a WLAN access point.

In one specific embodiment, the transmission module 72 is further configured to transmit one or more of the following information about a recent cell in which the UE visited in the connected and / or idle state: a cell global identifier, a cell type, a time stayed, information about a respective small base station gateway or a respective home base station gateway corresponding to a cell.

In one specific embodiment, the transmission module 72 is further configured to transmit IP address or ID information of the respective small base station gateway or the respective home base station gateway corresponding to the cell.

In one specific embodiment, the transmission module 72 is further configured to send the past visiting information of the UE to be paged by means of an S1 interface message.

In one specific embodiment, the transmission module 72 is further configured to send the past visiting information of the UE to be paged by one or more of the following S1 interface messages: INITIAL UE MESSAGE, UPLINK NAS TRANSPORT, LOCATION REPORT and the like.

Embodiments of the present disclosure also provide a system for paging optimization, the system comprising apparatus for paging optimization shown in Figures 6 and 7.

With the solution according to the various embodiments of the present disclosure, it is possible to realize an optimization to the paging message conveying range for the UEs by way of reporting the auxiliary information of paging optimization in the existing communication network and the complicated small base station or home base station environment. It is also advantageous to enhance network performance and prevent the occurrence of signaling storms.

The technical solution of the present disclosure will be described in further detail with reference to specific embodiments.

### EMBODIMENT 1

Scenario of Embodiment 1: there is no small base station gateway or home base station gateway.

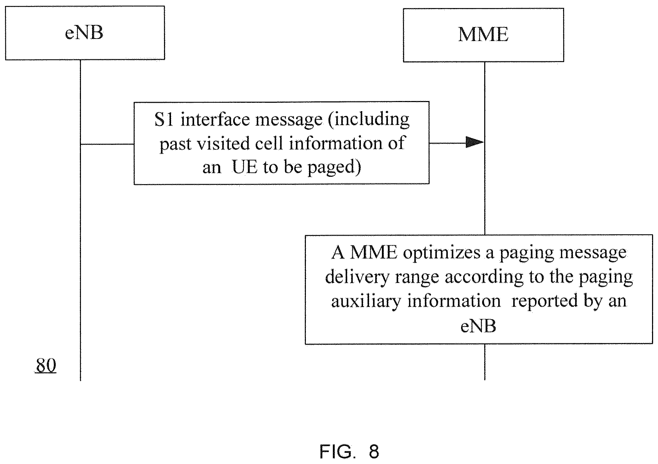

Figure 8 illustrates a flow diagram of a method for paging optimization in the Embodiment 1 of the present disclosure. As shown in Figure 8, following is the specific steps of Embodiment 1:
Step 1: an eNB reports the past visiting information of the UE to be paged to a MME through an S1 interface message, wherein the past visiting information includes information of the cell that the UE to be paged visited in the connected and / or idle state. The information of a recent cell includes but not limited to information of a UTRAN cell, a GERAN cell, a LTE cell, and can also include a time stayed in a CDMA cell, or a WLAN access point. The information is also arranged in a chronological order, such as the latest cell record being at the forefront of the list. The cell information contains one or more of the following information, such as for example cell global identifier, cell type, and time stayed. The S1 interface message herein can utilize UE-dedicated S1 interface message, which may be but not limited to one or more of the following types of message: INITIAL UE MESSAGE, UPLINK NAS TRANSPORT, LOCATION REPORT.
Step 2: MME optimizes the paging message conveying range according to the past visiting information of the UE to be paged. For example, MME may derive the ID of an eNB that a UE had visited through the cell or eNB information, and determine the mobility status of a UE based on the past visiting information of the UE. The MME only transmits a paging message to one or more eNBs within the paging conveying range where the UE is most likely located.

### EMBODIMENT 2

The scenario of the present embodiment is that there is a small base station gateway and / or a home base station gateway.

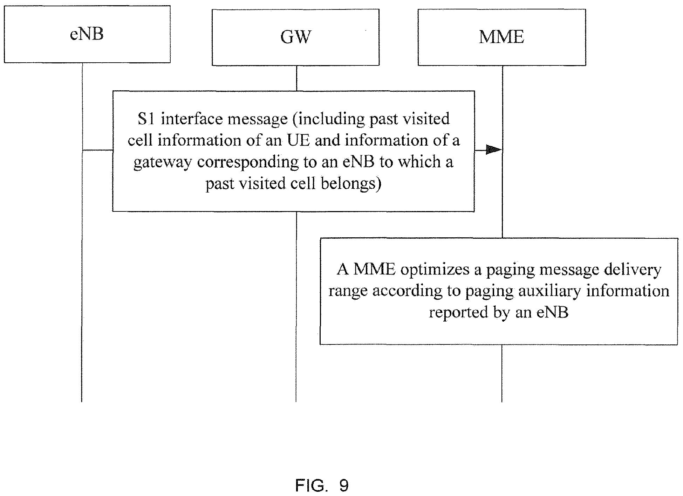

Figure 9 shows a flow diagram of a method for paging optimization in the present Embodiment 2. As shown in Figure 9, following is the specific process steps of Embodiment 2::
Step 1: a base station reports the past visiting information of a UE to be paged to MME through an S1 interface message, wherein the past visiting information of the UE includes information about the recent cell that the UE to be paged visited in the connected and/or idle state. Information about the recent cell may include but not limited to information of a UTRAN cell, a GERAN cell, a LTE cell, and can also include information of the UE visiting a CDMA cell or a WLAN access point. The past visiting information is chronologically ordered in a list, for example, the latest recent cell information is at the most front of the list. Wherein cell information includes one or more of the following information, for example, cell global identifier, cell type, time stayed, and information about a respective small base station gateway or a respective home base station gateway corresponding to a cell. The information about the respective small base station or the respective home base station can include the IP address or ID information of the respective small base station and home base station.

In the present embodiment, the S1 interface message carries information about the recent cells, and information about the respective small base station gateways or home base station gateways corresponding to the cells. It can be understood that, information about a recent cell and its corresponding small base station gateway or home station gateway is carried all together.

The S1 interface message herein can use a UE-dedicated S1 interface message which can be one or more of but not limited to the following messages, including INITIAL UE MESSAGE, an UPLINK NAS TRANSPORT message, a LOCATION REPORT message.
Step 2: The MME, based on the past visiting information of the UE to be paged, optimizes the paging message conveying range. For example, the MME can derive the ID information of an eNB that the UE to be paged visited recently based on the cell information, and can also determine the mobility status of the UE to be paged based on the past visiting information of the UE. Combined with information about the respective small base station gateway or the respective home base station gateway corresponding to a cell, the MME can only transmit a paging message to one or more base stations, small base station gateways or home base station gateways within the paging conveying range where the UE is most likely located.

### EMBODIMENT 3

The scenario of the present embodiment is that there is a small base station gateway and / or a home base station gateway.

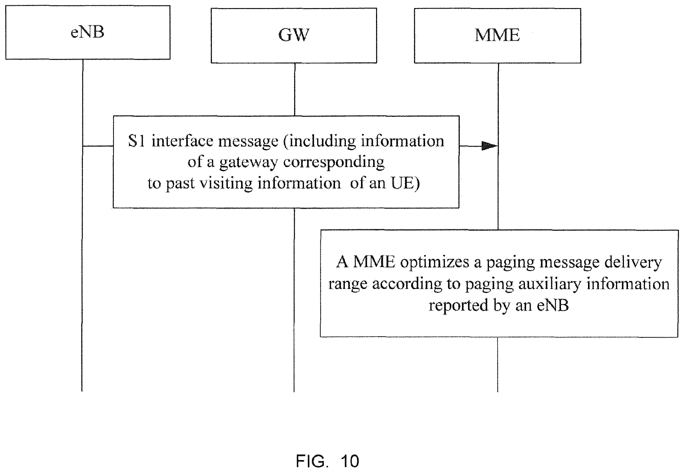

Figure 10 is a flow diagram of a method for paging optimization in the present Embodiment 3. As shown in Figure 10, the specific process steps of Embodiment 3 are as follows:
Step 1: a base station reports to MME information about the small base station gateways and / or home base station gateways that a UE visited in the last time or recent multiple times through an S1 interface message. The information is arranged in a chronological order in a list, such as for example the most recent record being at the top of the list. Herein the information about a small base station gateway or a home base station gateway may be one or more of the following: IP address information of a small base station gateway or a home base station gateway, ID information of a small base station gateway or a home base station gateway.

The S1 interface message herein can utilize a UE-dedicated S1 interface message, including but not limited to one or more of the following S1 interface message: INITIAL UE MESSAGE, UPLINK NAS TRANSPORT message, LOCATION REPORT message.
Step 2: MME, based on the past visiting information of a UE, optimizes the paging message conveying range. For example, based on the last serving cell information of a UE, MME can derive the base station ID the UE visited recently, and MME can combine the base station ID with information about small base station gateways and/or home base station gateways that the UE had visited such that the MME only transmits a paging message or paging messages to one or more base stations, small base station gateways or home base station gateways within the paging conveying range where the UE is most likely located.

### EMBODIMENT 4

The scenario of the present embodiment is that there is a small base station gateway and / or a home base station gateway.

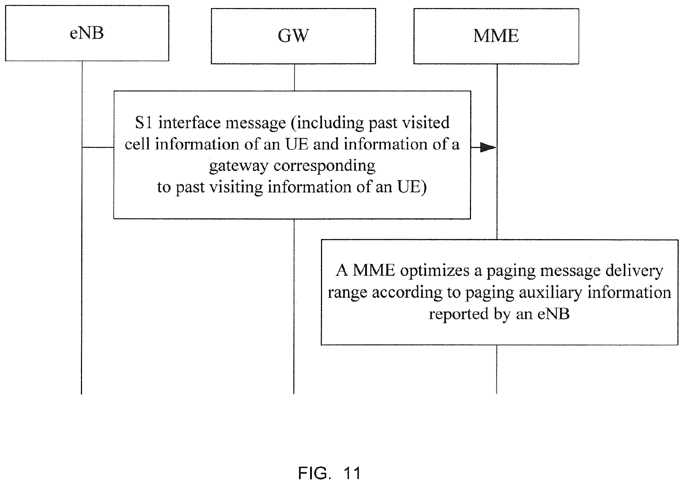

FIG 11 is a flow diagram of a method for paging optimization in the present Embodiment 4. As shown in Figure 11, the specific steps of Embodiment 4 are as follows:
Step 1: a base station reports the past visiting information of a UE to be paged to MME through an S1 interface message, wherein the UE past visiting information includes information about the recent cells in which the UE to be paged visited during the connected and/or idle state. Information about the recent cells may include but not limited to information of a UTRAN cell, a GERAN cell, a LTE cell, and can also include visiting information of a CDMA system or a WLAN system. The recent cells information is chronologically sorted in a list, for example, the most recent cell information is the first entry of the list. Wherein cell information includes one or more of the following information, for example, cell global identifier, cell type, time stayed. Furthermore, eNB can also report information about small base station gateway(s) or home base station gateway(s) that a UE recently visited for once or multiple times to MME. The information is chronologically sorted, for example, the most recent information is the first entry of the list. The information about small base station gateway(s) or home base station gateway(s) can include one or more of the IP address or ID information of small base station gateway(s) or home base station gateway(s).

The S1 interface message herein could utilize the UE-dedicated S1 interface message, which may be but not limited to one or more of the following: INITIAL UE MESSAGE, UPLINK NAS TRANSPORT message, LOCATION REPORT message, and the like.

In this embodiment, an S1 interface message carries recent cell information, also carries information about small base station gateway(s) or home base station gateway(s) that a UE visited recently. It can be understood that information about the recent cell(s) and information about small base station gateway(s) or home base station gateway(s) that a UE visited recently are independent.
Step 2: The MME, based on the past visiting information of a UE, optimizes the paging message conveying range. For example, the MME can derive the ID information of a base station that a UE visited recently based on cell information, and can also determine the mobility status of a UE based on the past visiting information of the UE. Combined with information about small base station gateway(s) and/or home base station gateway(s) that a UE visited in the past, the MME can only transmit paging message(s) to one or more base stations, small base station gateways or home base station gateways that have the highest possibility to cover the UE.

Each above unit may be implemented as a central processing unit (CPU), a digital signal processor (DSP) or a field-programmable gate array (FPGA) in electronic apparatus.

According to an embodiment of the present disclosure, a storage medium is described, wherein a computer program is stored thereon. The computer program is configured to execute the methods of aforementioned various embodiments of paging optimization.

It is understood by one skilled in the art that embodiments of the present disclosure may be provided as a method, system, or computer program product. Accordingly, the present disclosure may take the form of a hardware embodiment, a software embodiment, or a combination of software and hardware embodiments. Moreover, the present disclosure may also take the form of computer program products implemented on one or more computer-usable storage medium (including but not limited to disk storage and optical memory, etc.) where computer usable program code is stored thereon.

The present disclosure has been described with reference to flow charts and / or block diagrams of a method, apparatus (system), and computer program product according to various embodiments of the present disclosure. It is understood that each flow and / or block in the flowchart and / or block diagram, as well as the combination of processes and / or blocks in the flowchart and / or block diagram, can be implemented by computer programs. These computer programs may be provided to a processor of a general purpose computer, a dedicated computer for specific purposes, an embedded processor, or other programmable data processing device to create a machine, so that instructions executed by a processor of a computer or other programmable data processing device could create a device with functions that are specified by one or more blocks in one or more flowcharts and/or block diagrams.

These computer program instructions may also be stored in a computer readable memory that is capable of operating a computer or other programmable data processing device in a particular manner such that instructions stored produce a product that includes a command device. The instruction device could realize functions realized in one or more blocks of one or more flowcharts or block diagrams.

The computer program instructions can be also installed on computer or other programmable data processing devices, such that operation processes can be conducted on the computer or the other programmable devices to realize computer processing, so that instructions that are executed on computer or other programmable devices can realize functions that specified by one or more blocks in one or more flowcharts or block diagrams.

It should be noted that the presented embodiments are preferred embodiments, which do not limit the scope of the invention.

### INDUSTRIAL UTILITY

The present disclosure optimizes the paging message conveying range according to the past visiting information of the UE to be paged and a predetermined optimization strategy. In the various embodiments of the present disclosure, it is possible to provide a more optimized paging strategy based on the past visiting information of the UE to be paged, thereby preventing the occurrence of signaling storm caused by paging and avoiding excessive consumption of radio-frequency resources to a certain extent. Therefore, a good balance between the paging experience of the end user and the consumption of the radio-frequency resource is achieved.

## Claims

1. A method of paging optimization, the method comprising:
obtaining a past visiting information of a UE to be paged; and
optimizing a paging message conveying range according to the past visiting information of the UE to be paged and a predetermined optimization strategy.

2. The method of claim 1, wherein the past visiting information of the UE to be paged comprises information of a recent cell the UE visited during a connected and/or idle state, and wherein the recent cell comprises one or more types of cells or access points of the following: a UTRAN cell, a GERAN cell, a LTE cell, a CDMA cell, a WLAN access point.

3. The method of claim 2, wherein the information of the recent cell comprises one or more of the following: cell global identifier, cell type, time stayed, and information about a respective small base station gateway or a respective home base station gateway corresponding to a cell.

4. The method of claim 3, wherein the information about the respective small base station gateway or the respective home base station gateway includes IP address or ID information of the respective small base station gateway or the respective home base station gateway.

5. The method of any one of claims 1 to 4, wherein obtaining the past visiting information of the UE to be paged comprises: obtaining the past visiting information of the UE to be paged from an S1 interface message.

6. The method of any one of claims 1 to 4, wherein the S1 interface message comprises one or more of the following: an INITIAL UE MESSAGE, an UPLINK NAS TRANSPORT message, a LOCATION REPORT message.

7. A method of paging optimization, the method comprising:
transmitting a past visiting information of a UE to be paged, wherein the past visiting information of the UE to be paged is for optimizing a paging message conveying range.

8. The method of claim 7, wherein the past visiting information of the UE to be paged comprises information of a recent cell the UE visited during a connected and/or idle state, and
wherein the recent cell comprises one or more types of cells or access points of the following: a UTRAN cell, a GERAN cell, a LTE cell, a CDMA cell and a WLAN access point.

9. The method of claim 8, wherein the cell information comprises one or more of following: cell global identifier, cell type, time stayed, and information about a respective small base station gateway or a respective home base station gateway corresponding to a cell.

10. The method of claim 9, wherein the information about the respective small base station gateway or the respective home base station gateway information includes IP address or ID information of the respective small base station gateway or the respective home base station gateway.

11. The method of any one of claims 7 to 10, wherein transmitting the past visiting information of the UE to be page comprises:
transmitting said past visiting information of the UE to be paged through an S1 interface message.

12. The method of claim 11, wherein the S1 interface message comprises one or more of the following: INITIAL UE MESSAGE, UPLINK NAS TRANSPORT, LOCATION REPORT.

13. An apparatus for paging optimization, comprising: a first acquisition module, a configuration module, and an optimization module; wherein
the first acquisition module configured to obtain a past visiting information of a UE to be paged;
the configuration module is configured to configure an optimization strategy;
the optimization module is configured to optimize a paging message conveying range according to the past visiting information of the UE to be paged and a predetermined optimization strategy.

14. The apparatus according to claim 13, wherein the first acquisition module is further configured to obtain information of a recent cell that the UE to be paged visited during a connected and/or idle state, the recent cell comprising one or more types of cells or access points including: a UTRAN cell, a GERAN cell, a LTE cell, a CDMA cell and a WLAN access point.

15. The apparatus according to claim 14, wherein the first acquisition module is further configured to obtain one or more types of the following cell information of the recent cell that the UE to be paged visited during the connected and / or idle state: a cell global identifier, a type of cell, a time stayed, information about a respective small base station gateway or a respective home base station gateway corresponding to the cell.

16. The apparatus according to claim 15, wherein the first acquisition module is further configured to acquire IP address or ID information of the respective small base station gateway or the respective home base station gateway corresponding to the cell.

17. The apparatus according to any one of claims 13 to 16, wherein the first acquisition module is further configured to obtain the past visiting information of the UE to be paged from an S1 interface message.

18. The apparatus according to claim 17, wherein the first acquisition module is further configured to obtain the past visiting information of the UE to be paged from one or more types of the following S1 interface messages: INITIAL UE MESSAGE, an UPLINK NAS TRANSPORT message, a LOCATION REPORT message.

19. An apparatus for paging optimization, the apparatus comprising: a second acquisition module and a transmission module;
wherein the second acquisition module configured to obtain a past visiting information of a UE to be paged;
the transmission module is configured to transmit the past visiting information of the UE to be paged, wherein the past visiting information of the UE to be paged is configured for optimizing a paging message conveying range.

20. The apparatus of claim 19, wherein the transmission module is further configured to transmit information of a recent cell which the UE to be paged visited during a connected and/or idle state, wherein the recent cell comprising one or more of the following types of cells or access points: a UTRAN cell, a GERAN cell, a LTE cell, a CDMA cell, and a WLAN access point.

21. The apparatus of claim 20, wherein,
the transmission module is further configured to transmit one or more of the following information of the recent cell which the UE to be paged visited in the connected and/or idle state: cell global identifier, cell type, time stayed, information about a respective small base station gateway or a respective home base station gateway corresponding to a cell.

22. The apparatus of claim 21, wherein,
the transmission module is further configured to transmit IP address or ID information of the respective small base station gateway or the respective home base station gateway.

23. The apparatus according to any one of claims 19 to 22, wherein the transmission module is further configured to transmit the past visiting information of the UE to be paged through an S1 interface message.

24. The apparatus according to claim 23, wherein the transmission module is further configured to transmit the past visiting information of the UE to be paged by one or more of the following S1 interface messages: an INITIAL UE MESSAGE, an UPLINK NAS TRANSPORT message, a LOCATION REPORT message.

25. A system for paging optimization, comprising an apparatus for paging optimization as claimed in any one of claims 13 to 18 and any one of claims 19 to 24.

26. A storage medium wherein a computer program is stored thereon, the computer program configured to perform a method for paging optimization as claimed in any one of claims 1 to 12.
